# EUROPÄISCHE PATENTANMELDUNG

(11) **EP 0 606 594 A2**
(43) Veröffentlichungstag der Anmeldung: **20.07.1994**
(21) Anmeldenummer: 93120068.7
(22) Anmeldetag: 13.12.1993
(51) Int. Cl.: F16D 43/18

(54) **Fliehkraftkupplung mit einem eine Nabe aufweisenden Antriebsflansch**

(30) Priorität: 09.01.1993 DE 4300442
(71) Anmelder: ROBERT SCHEUFFELE GmbH & Co. KG, 74321 Bietigheim-Bissingen (DE)
(72) Erfinder: Scheuffele, Gebhard, D-74321 Bietigheim-Bissingen (DE)
(74) Vertreter: Wilhelm & Dauster Patentanwälte European Patent Attorneys

(57) **Zusammenfassung**

Fliehkraftkupplung mit einem um eine Antriebsachse (5) drehbaren, eine Nabe (4) aufweisenden Antriebsflansch (1).

Wenn bei Fliehkraftkupplungen gemäß dem Stand der Technik der Reibbelag (9) der Fliehbacken (3) nicht rechtzeitig ausgewechselt wird, verschleißen auch die Fliehbacken (3) selbst, so daß neben dem Reibbelag (9) auch die Fliehbacken (3) ausgewechselt werden müssen.

Gemäß der Erfindung ist der Fliehbacken (3) mit einem seinen Schwenkwinkel auf einen definierten Abrieb der Reibfläche (9) begrenzenden Anschlag (14) versehen, der einer korrespondierenden Anschlagfläche (13) an der Nabe (4) des Antriebsflansches (1) zugeordnet ist.

Verwendung in der Antriebstechnik.

## Beschreibung

Die Erfindung betrifft eine Fliehkraftkupplung mit einem um eine Antriebsachse drehbaren, eine Nabe aufweisenden Antriebsflansch und einer die Nabe übergreifenden Kupplungsglocke, sowie mit wenigstens einem zwischen der Nabe des Antriebsflansches und einer Innenwandung der Kupplungsglocke im wesentlichen radial beweglichen, einen mit einer Reibfläche versehenen Reibbelag aufweisenden Fliehbacken, der drehfest mit dem Antriebsflansch verbunden und an diesem in Abstand zu seinem Massenschwerpunkt mittels wenigstens eines Lagerelementes um eine zur Antriebsachse parallele Schwenkachse schwenkbar gelagert ist.

Eine solche Fliehkraftkupplung ist aus der DE-AS 1 165 437 bekannt, die zur Kraftübertragung der Leistung eines Fahrradhilfsmotors auf ein Hinterrad eines Fahrrades mittels eines Reibrades beiträgt. Zum Auskuppeln des Reibrades ist eine Kupplungsvorrichtung vorgesehen, die aus einer Kombination zweier Kupplungen besteht, von denen eine die Fliehkraftkupplung darstellt. Die Fliehkraftkupplung weist zwei Fliehbacken auf, die konzentrisch um eine Nabe des Antriebsflansches angeordnet sind und jeweils an einer Seite am Antriebsflansch schwenkbar gelagert sind. Eine Kupplungsglocke übergreift die beiden Fliehbacken. Die beiden Fliehbacken sind halbkreisförmig gekrümmt und weisen jeweils an ihrem der Schwenkachse gegenüberliegenden freien Ende einen Reibbelag auf, der bei Auftreten einer Fliehkraft gegen die Innenwandung der Kupplungsglocke gedrückt wird. Aufgrund der schwenkbaren Anordnung der beiden Fliehbacken bringt die Fliehkraftkupplung lediglich in einer Drehrichtung eine ausreichende Kraftübertragung.

Aufgabe der Erfindung ist es, eine Fliehkraftkupplung der eingangs genannten Art zu schaffen, die einen verbesserten Einsatz des Reibbelages ermöglicht.

Diese Aufgabe wird dadurch gelöst, daß der Fliehbacken mit einem seinen Schwenkwinkel auf einen definierten Abrieb der Reibfläche begrenzenden Anschlag versehen ist, der einer korrespondierenden Anschlagfläche an der Nabe des Antriebsflansches zugeordnet ist. Dadurch ergibt sich eine automatische Abriebbegrenzung für den Fliehbacken. Sobald der Reibbelag vollständig abgerieben ist, liegt der Fliehbacken im Betrieb an der Innenwandung der Kupplungsglocke an, so daß der Anschlag mit der Nabe des Antriebsflansches in Berührung kommt. Ein weiteres Verschwenken des Fliehbackens ist somit nicht möglich. Wenn hingegen beim Stand der Technik der Reibbelag nicht rechtzeitig ausgewechselt wird, werden auch die ursprünglich unter dem Reibbelag liegenden Teile des Fliehbackens angegriffen und verschlissen. In diesem Fall muß daher der gesamte Fliehbacken ausgetauscht werden. Gemäß der Erfindung genügt jedoch auch bei zu langer Standzeit des Reibbelages ein einfaches Auswechseln des Reibbelages, um die Fliehkraftkupplung wieder voll funktionstüchtig zu machen. Durch die Schwenkwinkelbegrenzung des Fliehbackens kommt nämlich die Reibfläche ab einem bestimmten Abnutzungsgrad des Reibbelages nicht mehr reibschlüssig mit der Innenwandung der Kupplungsglocke in Verbindung, so daß die Kupplung außer Funktion kommt und kein weiterer Abrieb mehr möglich ist. Das Auswechseln des Reibbelages ist zum einen kostengünstiger und zum anderen wesentlich einfacher und schneller durchzuführen.

Vorteilhaft ist der Anschlag in einem nach innen gerichteten und bei einer aufgrund einer Fliehkraft auftretenden Schwenkbewegung sich im wesentlichen radial nach innen gegen den Außenumfang der Nabe des Antriebsflansches bewegenden Bereich des Fliehbackens vorgesehen, dessen Abstand zu der korrespondierenden Anschlagfläche am Außenumfang der Nabe so bemessen ist, daß der Anschlag im Betrieb der Fliehkraftkupplung spätestens zu dem Zeitpunkt mit der Anschlagfläche in Berührung kommt, zu dem der Reibbelag vollständig abgetragen ist. Der Anschlag wirkt daher gegensinnig zu der durch die Fliehkraft auftretenden Schwenkbewegung des Fliehbackens und begrenzt somit automatisch diese Schwenkbewegung auf einen vorbestimmten Schwenkwinkel.

Die erfindungsgemäße Aufgabe wird auch dadurch gelöst, daß der Reibbelag kreisbogenförmig gekrümmt den Außenumfang des Fliehbackens überdeckt und im unbelasteten Ruhezustand der Fliehkraftkupplung einen sich von einem freien Ende des Fliehbackens zur Schwenkachse hin kontinuierlich verringernden Abstand seiner Reibfläche zur Innenwandung der Kupplungsglocke aufweist. Dadurch ergibt sich zum einen eine breite Reibfläche, die einen verbesserten Reibschluß zur Folge hat. Zum anderen kommt der Reibbelag bereits bei geringen Schwenkbewegungen aufgrund relativ geringer Fliehkräfte in Reibschluß mit der Innenwandung der Kupplungsglocke, so daß bereits bei relativ geringen Antriebsdrehzahlen eine reibschlüssige Verbindung erfolgen kann. Dies kann beispielsweise durch eine unterschiedliche Dicke des Reibbelages erreicht werden. Durch diese Lösung erfolgt zudem über einen großen Drehzahlbereich eine gleichmässige Drehmomentübertragung.

Gemäß einer Ausgestaltung dieser erfindungsgemäßen Lösung ist die Schwenkachse des Fliehbackens relativ zur Antriebsachse so radial nach außen versetzt, daß der Fliehbacken in seinem unbelasteten Ruhezustand relativ zur Antriebsachse exzentrisch zwischen Nabe und Kupplungsglocke angeordnet ist. Durch diese Maßnahme wird der gleiche Effekt wie bei einem unterschiedlich dicken Reibbelag erzielt. Auch hier kommt der Fliehbacken bereits bei geringeren Drehzahlen in Eingriff mit der Innenwandung mit der Kupplungsglocke.

In weiterer Ausgestaltung der Erfindung beträgt der Abstand zwischen Reibfläche und Innenwandung auf - auf die Antriebsachse bezogen - radialer Höhe der Schwenkachse des Fliehbackens weniger als 0,5 mm und im Bereich des freien Endes etwa 1 mm. Diese Maße beziehen sich auf den Neuzustand der Kupplung und stellen Maße einer durch Versuche optimierten praktischen Ausführungsform dar.

Weitere Vorteile und Merkmale der Erfindung ergeben sich aus den Unteransprüchen sowie aus der nachfolgenden Beschreibung eines Ausführungsbeispiels der Erfindung, das anhand der Zeichnungen dargestellt ist.
- Fig. 1: zeigt in einem Schnitt entlang der Schnittlinie I-I in Fig. 2 eine Ausführung einer erfindungsgemäßen Fliehkraftkupplung, die mit zwei einander gegenüberliegenden, im Querschnitt jeweils ein Kreisringsegment darstellenden Fliehbacken versehen ist, die mit einem Antriebsflansch der Fliehkraftkupplung drehfest verbunden und an diesem im wesentlichen radial schwenkbeweglich gelagert sind, und
- Fig. 2: eine Schnittdarstellung der Fliehkraftkupplung nach Fig. 1 entlang der Schnittlinie II-II in Fig. 1.

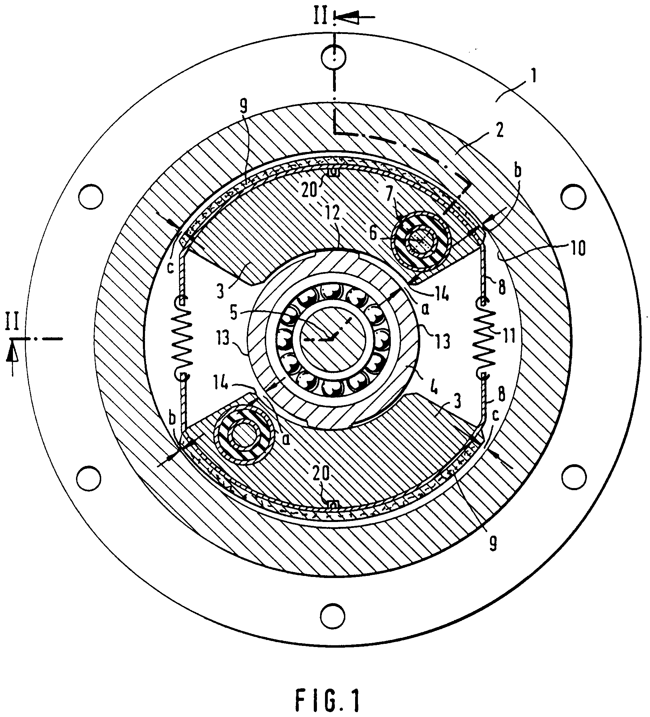

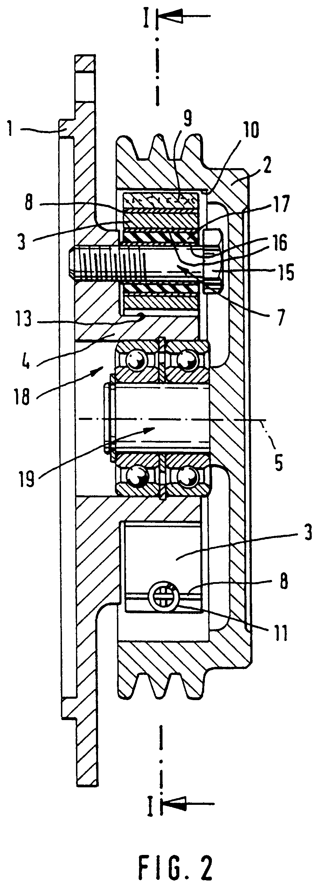

Die Fliehkraftkupplung nach Fig. 1 weist einen Antriebsflansch (1) auf, der in an sich bekannter Weise mit einer Antriebsscheibe eines Antriebsmotors verbindbar ist. Der Antriebsflansch (1) ist rotationssymmetrisch zu einer Antriebsachse (5) ausgebildet. Der Antriebsflansch (1) ist mit einer zu einer Seite abragenden, zur Antriebsachse (5) koaxialen Nabe (4) versehen, die einen etwa kreisringförmigen Querschnitt aufweist. In dieser Nabe (4) ist mittels Kugellagern (18) (Fig. 2) eine Kupplungsglocke (2) frei drehbar gelagert. Die Kupplungsglocke (2) übergreift die Nabe (4) koaxial zur Antriebsachse (5) in einem radialen Abstand, so daß zwischen einer zur Antriebsachse (5) koaxialen zylindrischen Außenwandung (13) der Nabe (4) und einer ebenfalls zur Antriebsachse (5) koaxialen zylindrischen Innenwandung (10) der Kupplungsglocke (9) ein ringförmiger Hohlraum verbleibt. Zur Lagerung der Kupplungsglocke (2) in der Nabe (4) weist die Kupplungsglocke (2) eine koaxial in die Nabe (4) hineinragende Lagerwelle (19) auf, die in der Kugellagerung (18) mittels eines Sicherungsringes axial fixiert ist. Der Außenumfang der Kupplungsglocke (2) ist als Riemenrad ausgebildet.

In dem zwischen der Nabe (4) und der Kupplungsglocke (2) gebildeten Hohlraum sind zwei Fliehbacken einander symmetrisch zur Antriebsachse (5) gegenüberliegend angeordnet. Beide Fliehbacken (3) stellen in dem in Fig. 1 dargestellten Querschnitt Kreisringsegmente dar. Beide Fliehbacken (3) sind mittels einer Schwenklagerung (7) drehfest mit dem Antriebsflansch verbunden, so daß sie bei einer Drehung des Antriebsflansches (1) mit diesem mitgenommen werden. Außerdem sind sie mittels dieser Schwenklagerung (7) relativ zur Antriebsachse (5) radial schwenkbeweglich gelagert. Die Schwenkachse (6) jedes Fliehbackens (3) ist parallel zur Antriebsachse (5) und befindet sich für jeden Fliehbacken (3) seitlich im Abstand zum Massenschwerpunkt jedes Fliehbackens (3). Funktion, Aufbau und Anordnung der beiden Fliehbacken (3) innerhalb der Fliehkraftkupplung entsprechen einander vollständig. Nachfolgend wird daher meistens nur auf einen der beiden Fliehbacken (3) Bezug genommen. Die jeweilige Beschreibung gilt aber in gleicher Weise auch für den anderen.

In einer zur Schwenkachse (6) koaxialen Bohrung des Fliehbackens (3) ist eine gummielastische Buchse (16, 17) gleitbeweglich eingepaßt, so daß der Fliehbacken (3) um die gummielastische Buchse (16, 17) verschwenkbar ist. Die Buchse (16, 17) besteht aus zwei Metallhülsen (16) unterschiedlichen Durchmessers, die zwischen sich eine gummielastische Hülse (17) einfassen. Die Buchse (16, 17) wird mittels einer Schraube (15) am Antriebsflansch (1) fixiert, wobei die innere Metallhülse (16) als Abstandshalter für die Schraube (15) dient, so daß der Kopf der Schraube (15) nicht auf dem Fliehbacken (3) zur Anlage kommt. Durch die gummielastische Buchse (16, 17) können Vibrationen der Fliehkraftkupplung aufgefangen werden, wodurch eine verbesserte Laufruhe gewährleistet ist.

An seinem Innenumfang stützt sich jeder Fliehbacken (3) an einem Auflagenocken (12) der Nabe (4) ab, der jeweils einen radial abragenden Bereich der Außenwandung der Nabe (4) darstellt. Die beiden Auflagenocken (12) der Nabe (4) liegen einander relativ zur Antriebsachse (5) gegenüber. Jeder Fliehbacken (3) liegt daher im wesentlichen zentrisch auf dem jeweiligen Auflagenocken (12) auf, so daß sich die Innenwandung des Fliehbackens (3) zu beiden Seiten des Auflagenockens (12) in Abstand zur jeweiligen Außenwandung (13) der Nabe (4) befindet.

Im Bereich des der Innenwandung (10) der Kupplungsglocke (2) zugewandten Außenumfangs des Fliehbackens (3) ist ein entsprechend dem Außenumfang gebogener Reibbelag (9) vorgesehen, der auf einem Belagbügel (8) beispielsweise durch Verkleben fixiert ist. Jeder Belagbügel (8) weist in einem mittleren Bereich eine Bördelung auf, die in eine Nut (20) des Fliehbackens (3) eingesetzt ist. Der den Reibbelag (9) enthaltende Belagbügel (8) wird bei der Montage auf den Außenumfang des Fliehbackens (3) aufgeschoben und durch die Nut (15) in der vorgeschriebenen Lage positioniert. Die freien Enden der gegenüberliegenden Belagbügel (8) sind durch Zugfedern (11) miteinander verbunden, so daß durch diese Anordnung die beiden Fliehbacken (3) gegeneinander verspannt und gegen ihren jeweiligen Auflagenocken (12) gedrückt werden.

Die beiden Fliehbacken (3) sind nicht exakt konzentrisch zur Antriebsachse (5) im Hohlraum zwischen Nabe (4) und Kupplungsglocke (2) angeordnet, sondern im Ruhezustand der Kupplung jeweils leicht exzentrisch zur Antriebsachse (5) in der Schwenkebene verkippt. Dies wird dadurch erreicht, daß die Schenkachsen (6) der beiden Fliehbacken (3) - auf eine zur Antriebsachse (5) konzentrische Anordnung der Fliehbacken (3) bezogen - jeweils um einen geringen Betrag radial nach außen versetzt sind. Dabei handelt es sich um einen Betrag von wenigen Zehntel eines Millimeters. Durch diese etwas verkippte Anordnung jedes Fliehbackens (3) innerhalb des zwischen Nabe (4) und Kupplungsglocke (2) gebildeten Hohlraumes weist die Reibfläche des Reibbelages (9) im Bereich der Schwenkachse (6) einen Abstand (b) zur Innenwandung (10) der Kupplungsglocke (2) auf, der beim Ausführungsbeispiel im Neuzustand der Fliehkraftkupplung etwa 0,4 mm beträgt. Dieser Abstand (b) ist geringer als ein Abstand (c) der Reibfläche des Reibbelages (9) am gegenüberliegenden freien Ende des Fliehbackens (3), ebenfalls relativ zur Innenwandung (10) der Kupplungsglocke (2). Beim Ausführungsbeispiel beträgt der Abstand (c) im Neuzustand der Kupplung etwa 1 mm. Durch die verkippte Anordnung jedes Fliehbackens (3) nimmt der Abstand der Reibfläche des Reibbelages (9) zur Innenwandung (10) der Kupplungsglocke (2) vom freien Ende aus (Abstand c) in Richtung zur Schwenkachse (6) (Abstand b) kontinuierlich ab.

In gleicher Weise weist auch der Innenumfang jedes Fliehbackens (3) zur Außenwandung (13) der Nabe (4) im Bereich seiner gegenüberliegenden Enden einen unterschiedlichen Abstand auf, wobei der Abstand im Bereich der Schwenkachse (6) entsprechend umgekehrt größer ist als der im Bereich des freien Endes des Fliehbackens (3). In etwa auf die Antriebsachse (5) bezogener radialer Höhe der Schwenkachse (6) ist am Innenumfang des Fliehbackens (3) ein Anschlag (14) vorgesehen, der im Ruhezustand des Fliehbackens (3) einen definierten radialen Abstand (a) zur Außenwandung (13) der Nabe (4) hat. Dieser Anschlag (14) stellt eine Verschleißbegrenzung des Fliehbackens (3) dar. Während des Betriebs der Fliehkraftkupplung wird der Reibbelag (9) nämlich allmählich abgetragen. Wird ein verschlissener Reibbelag nicht rechzeitig ausgewechselt, so würde beim Stand der Technik zunächst der Gleitbügel (8) und anschließend der Fliehbacken (3) selbst abgerieben. Für das Wiederinstandsetzen der Fliehkraftkupplung wären in diesem Fall neben einem neuen Reibbelag und einem neuen Gleitbügel auch der Fliehbacken (3) selbst auszuwechseln. Um dies zu verhindern, weist der Anschlag (14) einen Abstand (a) zur Außenwandung (13) der Nabe (4) auf, der so bemessen ist, daß der Anschlag (14) beim Betrieb der Kupplung spätestens zu dem Zeitpunkt mit der Außenwandung (13) in Berührung kommt, zu dem der Reibbelag (9) vollständig abgerieben ist. Der Abstand (a) kann auch so bemessen sein, daß der Bügel (8) noch zusätzlich teilweise angegriffen wird, da in der Regel ohnehin Reibbelag (9) und Bügel (8) unlösbar miteinander verbunden sind und daher gemeinsam ausgetauscht werden müssen. In jedem Fall wird durch die erfindungsgemäße Lösung ein Verschleiß des Fliehbackens (3) verhindert.

Um den entsprechenden Abstand (a) zu erhalten, wird bei der Herstellung der Fliehkraftkupplung entweder die Dicke der Nabe (4) so auf die Kante (14) des Fliehbackens (3) abgestimmt, daß sich der Abstand (a) bereits bei der Montage in der verkippten Ruhelage des Fliehbackens (3) ergibt. Bei einer nicht dargestellten Ausführung der Erfindung, bei der Außenumfang der Nabe (4) und Innenumfang des Fliehbackens (3) einen relativ großen Abstand zueinander aufweisen, wird im Bereich der Kante (14) ein Fortsatz als Anschlag vorgesehen, der den erforderlichen radialen Abstand aufweist.

Im Betrieb der Fliehkraftkupplung beginnen sich die Fliehbacken (3) ab einer bestimmten Antriebsdrehzahl durch die Zentrifugalkraft aus der in Fig. 1 dargestellten Ruhelage nach außen zu verschwenken. Bereits bei geringem Schwenkwinkel, d.h. bei relativ geringer Drehzahl, kommt der Reibbelag (9) jedes Fliehbackens (3) mit der Innenwandung (10) über einen großen Abschnitt seiner Umfangsfläche in Berührung. Dabei ist von Vorteil, daß der Abstand (b) im Bereich der Schwenkachse (6) geringer ist als der Abstand (c) im Bereich des freien Endes des Fliehbackens (3). Dadurch werden nämlich teilweise die durch unterschiedliche Hebellängen bei der Schwenkbewegung des Fliehbackens (3) auftretenden verschiedenen Weglängen zwischen Reibbelag (9) und der Innenwandung (10) zwischen dem freien Ende und dem Bereich der Schwenkachse (6) ausgeglichen. Die Funktion der Fliehkraftkupplung ist solange gewährleistet, bis der Reibbelag (9) aufgrund des durch Reibschluß auftretenden Verschleißes soweit abgetragen ist, daß der Anschlag (14) mit der als Anschlagfläche dienenden Außenwandung (13) in Berührung kommt. Die Kupplung bringt daher ab diesem Zeitpunkt keine Leistung mehr, so daß automatisch erkannt werden kann, daß die Reibbeläge ausgewechselt werden müssen. Ein Verschleiß jedes Fliehbackens (3) selbst kann nicht auftreten.

## Patentansprüche

1. Fliehkraftkupplung mit einem um eine Antriebsachse drehbaren, eine Nabe aufweisenden Antriebsflansch und einer die Nabe übergreifenden Kupplungsglocke sowie mit wenigstens einem zwischen der Nabe des Antriebsflansches und einer Innenwandung der Kupplungsglocke im wesentlichen radial beweglichen, einen mit einer Reibfläche versehenen Reibbelag aufweisenden Fliehbacken, der drehfest mit dem Antriebsflansch verbunden und an diesem in Abstand zu seinem Massenschwerpunkt mittels wenigstens eines Lagerelementes um eine zur Antriebsachse parallele Schwenkachse schwenkbar gelagert ist, dadurch gekennzeichnet, daß der Fliehbacken (3) mit einem seinen Schwenkwinkel auf einen definierten Abrieb der Reibfläche des Reibbelages (9) begrenzenden Anschlag (14) versehen ist, der einer korrespondierenden Anschlagfläche (13) an der Nabe (4) des Antriebsflansches (1) zugeordnet ist.

2. Fliehkraftkupplung nach Anspruch 1, dadurch gekennzeichnet, daß der Anschlag (14) in einem nach innen gerichteten und bei einer aufgrund einer Fliehkraft auftretenden Schwenkbewegung sich im wesentlichen radial nach innen gegen den Außenumfang (13) der Nabe (4) des Antriebsflansches (1) bewegenden Bereich des Fliehbackens (3) vorgesehen ist, dessen Abstand (a) zu der korrespondierenden Anschlagfläche am Außenumfang (13) der Nabe (4) so bemessen ist, daß der Anschlag (14) im Betrieb der Fliehkraftkupplung spätestens zu dem Zeitpunkt mit der Anschlagfläche in Berührung kommt, zu dem der Reibbelag (9) vollständig abgetragen ist.

3. Fliehkraftkupplung nach Anspruch 1 oder 2, dadurch gekennzeichnet, daß der Reibbelag (9) kreisbogenförmig gekrümmt den Außenumfang des Fliehbackens (3) überdeckt und im unbelasteten Ruhezustand der Fliehkraftkupplung einen sich von einem freien Ende des Fliehbackens (3) zur Schwenkachse (6) hin kontinuierlich verringernden Abstand (c; b) seiner Reibfläche zur Innenwandung (10) der Kupplungsglocke (2) aufweist.

4. Fliehkraftkupplung nach dem Oberbegriff des Anspruchs 1, dadurch gekennzeichnet, daß der Reibbelag (9) kreisbogenförmig gekrümmt den Außenumfang des Fliehbackens (3) überdeckt und im unbelasteten Ruhezustand der Fliehkraftkupplung einen sich von einem freien Ende des Fliehbackens (3) zur Schwenkachse (6) hin kontinuierlich verringernden Abstand seiner Reibfläche zur Innenwandung (10) der Kupplungsglocke (2) aufweist.

5. Fliehkraftkupplung nach Anspruch 4, dadurch gekennzeichnet, daß die Schwenkachse (6) des Fliehbackens (3) relativ zur Antriebsachse (5) so radial nach außen versetzt ist, daß der Fliehbacken (3) in seinem unbelasteten Ruhezustand relativ zur Antriebsachse (5) exzentrisch zwischen Nabe (4) und Kupplungsglocke (2) angeordnet ist.

6. Fliehkraftkupplung nach Anspruch 4 oder 5, dadurch gekennzeichnet, daß der Abstand (b, c) zwischen Reibfläche und Innenwandung (10) auf - auf die Antriebsachse (5) bezogen - radialer Höhe der Schwenkachse (6) des Fliehbackens (3) weniger als 0,5 mm und im Bereich des freien Endes des Fliehbackens (3) etwa 1 mm beträgt.
